Europäisches Patentamt

European Patent Office

Office européen des brevets

(11) Veröffentlichungsnummer: **0 265 835**
**B1**

# (12) EUROPÄISCHE PATENTSCHRIFT

(45) Veröffentlichungstag der Patentschrift:
02.05.90

(51) Int. Cl.⁴: **B25J 18/02, B25J 19/00**

(21) Anmeldenummer: **87115461.3**

(22) Anmeldetag: **22.10.87**

(54) **Pneumatische oder hydraulische Medien oder Leitungen führender Tragarm.**

(30) Priorität: **25.10.86 DE 3636462**

(43) Veröffentlichungstag der Anmeldung:
**04.05.88 Patentblatt 88/18**

(45) Bekanntmachung des Hinweises auf die Patenterteilung:
**02.05.90 Patentblatt 90/18**

(84) Benannte Vertragsstaaten:
**AT BE CH ES FR GB IT LI NL SE**

(56) Entgegenhaltungen:
**EP-A- 0 106 826**
**EP-A- 0 132 442**
**DE-A- 3 417 121**
**FR-A- 2 540 849**

(73) . Patentinhaber: **Honsel-Werke AG, Fritz-Honsel-Strasse, D-5778 Meschede(DE)**

(72) Erfinder: **Linn, Willi, Raulfs-Ufer 12, D-5760 Arnsberg 2(DE)**
Erfinder: **Fink, Roland, Im Lehenbach 7, D-7065 Winterbach(DE)**
Erfinder: **Noschilla, Herbert, Richard Wagnerstrasse 31, D-7060 Schorndorf(DE)**
Erfinder: **Klingenstein, Walter, Burgstrasse 42, D-7068 Urbach-Nord(DE)**

(74) Vertreter: **Wangemann, Horst, Dipl.-Ing., Stresemannstrasse 28, D-4000 Düsseldorf 1(DE)**

## Beschreibung

Die Erfindung betrifft einen pneumatische oder hydraulische Medien oder Leitungen führenden Tragarm der im Oberbegriff des Hauptanspruches genannten Art.

Durch die DE-A-34 17 121 ist ein Handhabungsgerät bekannt, dessen hohler Ausleger Versorgungsleitungen aufnimmt. -Der DE-Prospekt der Firma Bosch "Bosch-Handhabungstechnik" erster Nachtrag zum Katalog 4.81 IA/AKN 001/6 (1.82), zeigt eine Führungsstange und Kolbenstange mit Längskanälen für die Luftführung zur Gerätebetätigung. - Tragarme nach dem Gattungsbegriff des Hauptanspruches sind bekannt und finden vielfältig Anwendung, so z. B. bei Schweißgeräten, in Sprüheinrichtungen, bei Greifereinrichtungen für Werkzeuge und Werkstücke in sog. Bearbeitungszentren mit spanverformenden oder spanabhebenden Metallbearbeitungsmaschinen, ferner als Roboterarme in den verschiedensten Ausbildungen etc. Hierbei reicht die Ausführungsform der Tragarme von einem einfachen, um eine vertikale Achse drehbaren Rohr zum Führen mehrerer Energieleitungen zu einem Bearbeitungswerkzeug bis zu einem im Querschnitt rechteckigen Führungsteil, in den der Tragarm teleskopartig ein- und ausfahrbar ist, wobei wiederum vorzugsweise elektrische oder pneumatische bzw. hydraulische Leitungen durch den im Querschnitt rechteckigen Tragarm geführt sind.

Diesem Stand der Technik gegenüber besteht die Aufgabe der Erfindung darin, einen Tragarm der eingangs genannten Gattung zu schaffen, der eine große Anzahl von Längsbohrungen aufweist, durch die die verschiedenen Medien unmittelbar bzw. die Leitungen geführt werden können, so z. B. acht bis zwanzig Bohrungen oder mehr unterschiedlichen Durchmesses in dem Tragarm angeordnet werden. Hierbei soll der Tragarm um z.B. 90 oder 180° um seine Längsmittelachse drehbar sein, wobei beim Drehen um 90° gleiche Widerstandswerte in den vier Endstellungen des Armes und beim Drehen um 180° gleiche Widerstandswerte in den beiden Endstellungen erreichbar sein sollen, so daß das vordere freie Tragarmende stets die gleiche Position einnimmt. Vor allem aber soll ein solcher Tragarm leicht herstellbar und montierbar sein.

Zur Lösung dieser Aufgabe sieht die Erfindung die Merkmale des kennzeichnenden Teils des Hauptanspruches vor - Die Merkmale der Unteransprüche dienen der Verbesserung und Weiterentwicklung der Merkmale des Hauptanspruches

Der Vorteil des erfindungsgemäßen Tragarmes ist darin zu sehen, daß eine große Anzahl von Bohrungen im Tragarm, der in einfacher Weise durch Strangpressen in seinen Einzelteilen herstellbar ist, eine Länge bis zu drei Metern aufweisen kann und hierbei ein Drehen um seine Längsmittelachse entweder zum beliebigen Einbau in einen Tragkörper eingesetzt werden kann oder aber beim Betrieb um seine Längsmittelachse um jeweils 90 und 180°C dehrbar ist und hierbei das freie Tragarmende immer die gleiche Endstellung einnimmt, da die Wiederstandsmomente jeder Drehstellung die gleichen sind. Vor allem aber offenbart sich eine leichte und problemlose Herstellbarkeit der Einzelteile des Tragarmes, wobei eine gleichmäßrige homogene Ausbildung über den Querschnitt und die Länge jedes Einzelteils erreichbar ist, so daß auch die Oberfläche der Bohrungen in den stranggepreßten Einzelteilen insbesondere strömungstechnisch vorteilhaft ausgebildet ist und keine Unebenheiten aufweist.

Auf der Zeichnung sind Ausführungsbeispiele des erfindungsgemäßen Tragarmes dargesellt und zwar zeigt

Fig. 1 eine Anwendungsmöglichkeit eines Tragarmes nach der Erfindung in einer um eine vertikale Achse drehbaren Zuführeinrichtung,

Fig. 2, 3 u. 4 eine Ausführungsform vier gleichartigen Strangpreßprofilen,

Fig. 5, 6 u. 7 eine Ausführungsform mit einem kreuzartigen Mittelstück und vier daran gehaltenen Einzelelementen und

Fig. 8 und 9 ein Ausführun gsform eines runden Tragarmes mit vier wiederum gleichartigen Einzelelementen und einem Mittelstück.

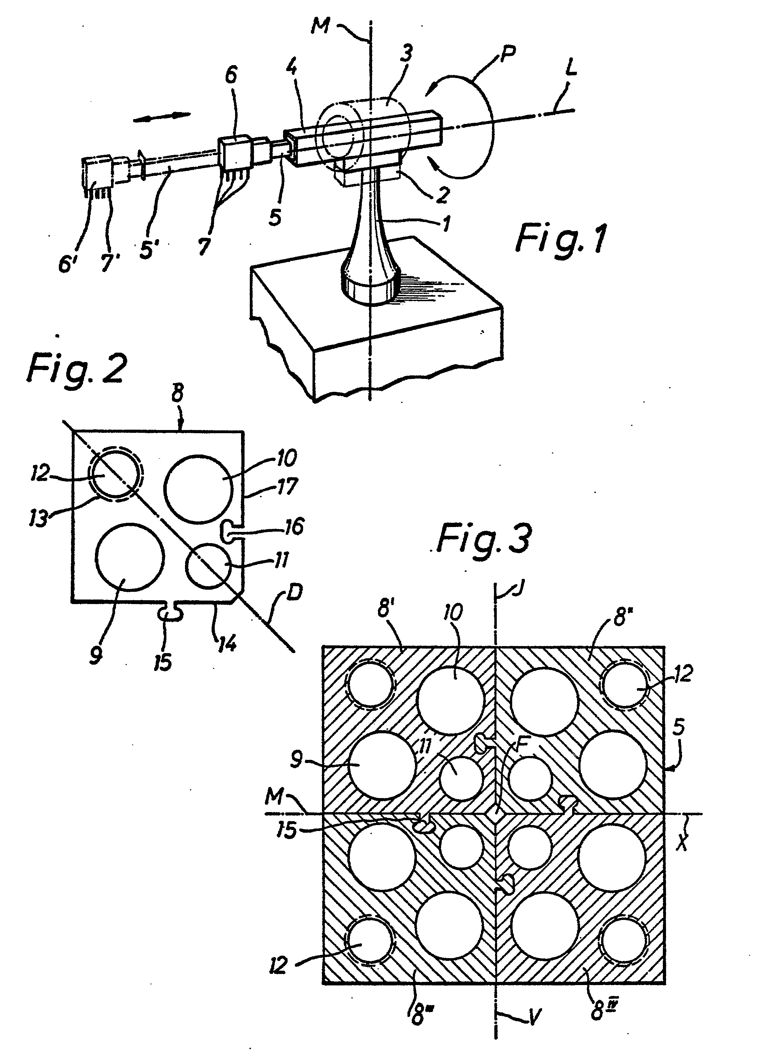

Bei dem in Fig. 1 dargestellten Anwendungsbeispiel des erfindungsgemäßen Tragarmes ist dieser an einer um eine senkrechte Mittelachse M drehbaren Säule 1 angebracht, die an ihrem oberen Ende ein Blöckchen 2 trägt, auf dem ein zylinderischer Teil 3 horizontal angeordnet ist. In diesem kann um eine Längsachse L ein Führungs- oder Rahmenstück 4 drehbar sein (vgl. Doppelpfeil P in Fig. 1), das somit eine Schwenkbewegung um die Achse M und eine Drehbewegung um die Achse L auszuführen vermag.

In das aus dem Führungs- oder Rahmenstück 4 ist der Tragarm 5 teleskopartig ein- und ausfahrbar und kann somit auch die Stellung 5' einnehmen. An seinen vorderen Ende trägt der Tragarm z. B. eine Greifereinrichtung oder aber, wie in dargestelltem Beispiel, einen Sprükopf 6, der mit entsprechenden Sprühdüsen 7 versehen ist. Die Sprühdüsen 7 können in die Stellung 7' ebenso gebracht werden, wie sie im Kreisbogen um die Achse M geschwenkt und um die Längsachse L gedreht werden können.

Der Tragarm 5 ist bei der Ausführungsform nach der Fig. 2 bis 4 aus vier Einzelelementen 8 gebildet, die, wie aus Fig 3 erkennbar ist, zu einem im Querschnitt des Tragarmes quadratischen Gebilde zusammensetzbar sind. Die beiden Einzelemente 8', 8″ der Fig. 3 verleihen der Arm bezüglich der Achse X, die in der Längsmittelebene M des Tragarmes gelegen ist, die gleichen Widerstandsmomente wie die Einzelemente 8‴ und 8⁗. Dies bedeutet, daß der Tragarm um 180° gedreht werden kann und hierbei die gleichen Widerstandswerte besitzt, so daß das Werkzeug am freien Ende des Tragarmes die gleiche Position im Raum erhält wie bei um 180° gedrehter Lage des Tragarmes.

Da die Einzelemente, wie Fig. 2 und 3 erkennen lassen, quadratischen Querschnitt besitzen, gilt das vorstehend Gesagte auch bezüglich der Achse Y, die in der vertikalen Längsmittelebene V des Armes gelegen ist. Hierdurch ist es möglich, den Tragarm um jeweils 90° um die Längsachse L zu drehen und hierbei stets dieselben Widerstandswerte bezüglich der Achsen X und Y zu erhalten.

Wie insbesondere Fig. 2 erkennen läßt, weist jedes Einzelelement größere Bohrungen 9, 10 sowie eine kleinere Bohrung 11 auf. Die weitere Bohrung 12 ist in Nähe des Tragarmendes mit einem Gewinde 13 versehen und dient zur Aufnahme des Gewindeschaftes der Schrauben, mit denen der Abschlußdeckel oder aber z. B. das Bearbeitungswerkzeug 7 mit dem Ende des Tragarmes verschraubt wird. - Die Bohrungen 9 bis 12 sind in dargestelltem Falle symmetrisch zu der Diagonalen D vorgesehen. Sie liegen in Bezug auf den Mittelpunkt F des Tragarmes 5 kreuzsymmetrisch in dem Arm, wobei die größeren Bohrungen, 9, 10 einen Kreis um die Mittellängsachse F des Armes bilden, während die kleineren Bohrungen 11 zu viert gleichfalls einen Kreis bilden bzw. in quadratischer Anordnung um die Längsmittelachse F gelegen sind. Die gleiche symmetrische Anordung lassen auch die Bohrungen 12 erkennen.

Ein solches Einzelelement wie das Element 8 läßt sich durch Strangpressen in Aluminum oder einer Al-Legierung problemlos herstellen. Die Bohrungen 9 bis 11 zeigen eine einwandfreie Glatwandigkeit zum Führen von pneumatischen und hydraulischen Medien ohne daß die Wandungen der Bohrungen Fehlstellen aufweisen, die die Strömung der Medien innerhalb der Bohrungen stören und so z. B. zu Schwingungen und Geräuschen des Tragarmes Veranlassung geben.

Die Einzelelemente 8' bis 8'''' können mit Hilfe von Verbindungsteilen miteinander verbunden werden. So kann die eine Seite 14 des Einzelelementes eine federartige Längsrippe 15 aufweisen, und eine entsprechende Ausnehmung 16 ist an der zweiten Längsseite 17 des Einzelelementes vorgesehen, so daß die vier Elemente nach Fig. 2 in der in Fig. 3 dargestellten Weise miteinander verbunden werden. Jede andere Verbindung der Einzelelemente durch Schweißen, Stiften, Nieten oder dgl. ist möglich.

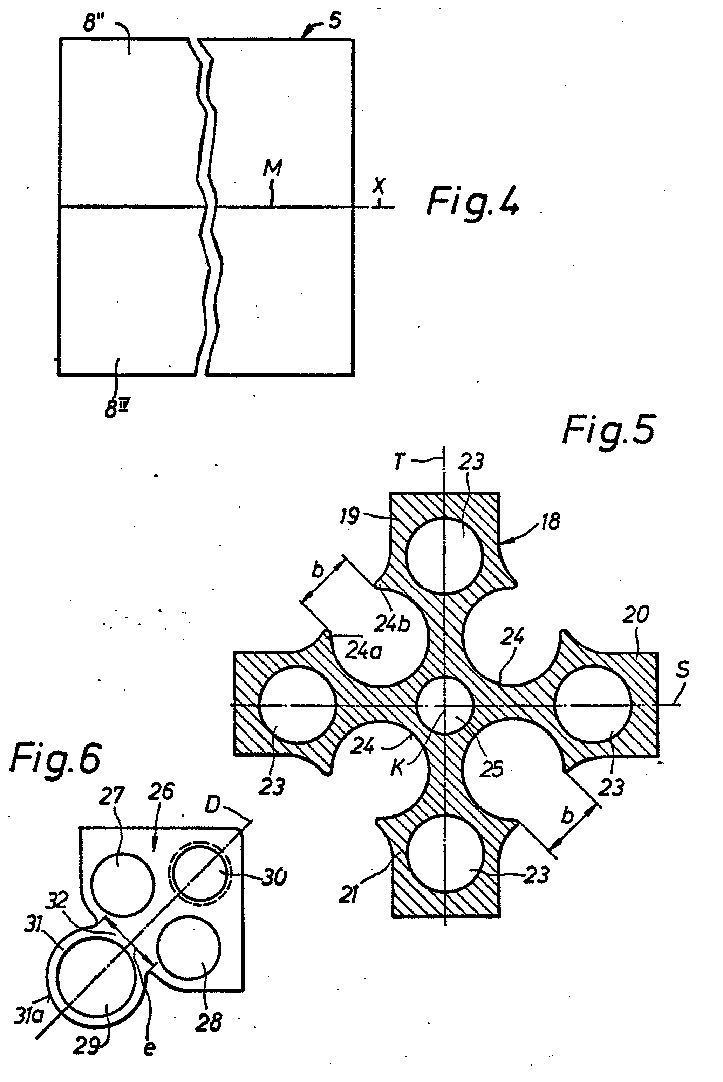

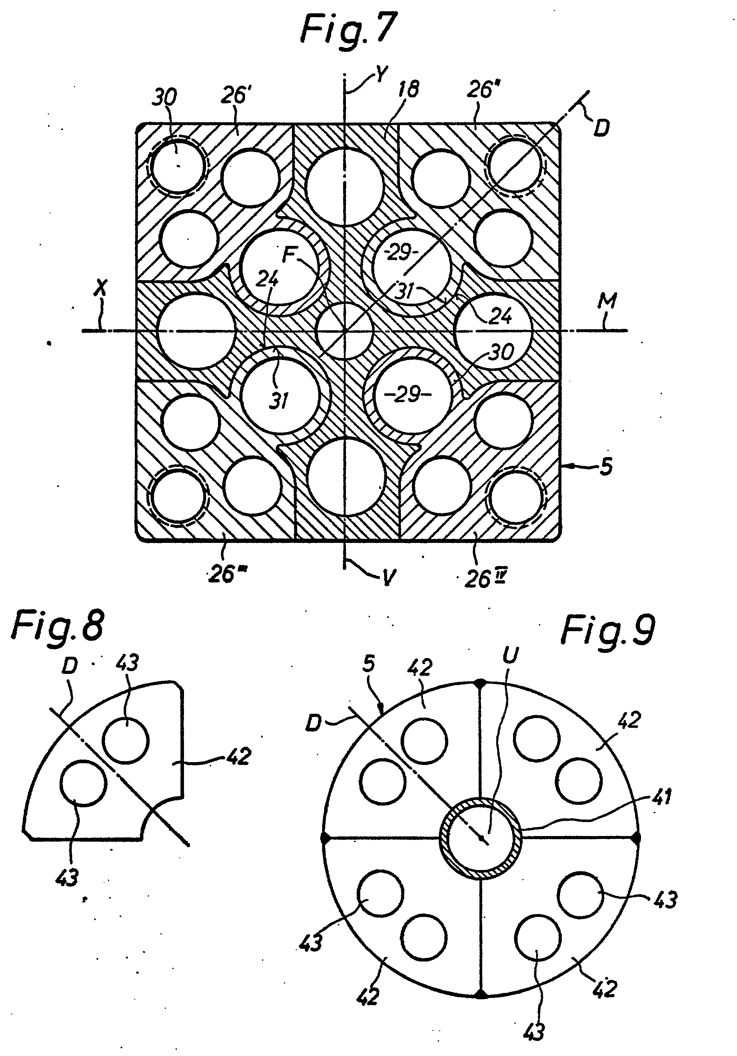

Bei der Ausführungsform nach Fig. 5 bis 7 bestehen bezüglich der Längsmittelebene M wie auch der vertikalen Längsmittelebene V und den in diesen Ebenen gelegenen Achse die gleichen Verhältnisse, wie sie vorstehend in Bezug auf die vier Einzelelemente nach Fig. 2 und 3 geschildert worden sind. Es entstehen wieder gleiche Widerstandsmomente bezüglich der in diesen beiden Ebenen gelegenen Achsen X und Y. Auch hier kommt es entscheidend darauf an, die Einzelelemente durch einfache Fertigung durch Strangpressen herstellen zu können und eine große Anzahl von Bohrungen zu erstellen, sei es, daß in diesen das pneumatische oder hydraulische Medium unmittelbar geführt wird oder aber Leitungen, z. B. elektrische Leitungen, durch diese Bohrungen geführt werden. - Der Arm 5 der Ausführungsform nach Fig. 7 bedient sich eines kreuzförmigen Mittelstückes 18 mit den Flügeln 19, 20, 21, 22, die gleichartig und symmetrisch um die Mittelachse K des Mittelstückes 18 angeordnet sind. Jeder Flügel weist eine Bohrung 23 auf, die gleichfalls wieder symmetrisch zu der Längs- und Quermittelebene S und T des kreuzförmigen Mittelstückes 18 angeordnet sind. Jeder Flügel 19 bis 22 ist von seinem Nachbarflügel durch eine bogenförmige Wand 24 getrennt bzw. mit dieser verbunden, deren Enden 24a, 24b in einem Abstand b voneinander gelegen sind. Das kreuzförmige Mittelstück kann noch eine Mittelbohrung 25 aufweisen.

Mit dem Mittelstück 18 werden vier gleichartige Einzelelemente 26 nach Fig. 6 verbunden. Jedes dieser Einzelemente weist wiederum symmetrisch zu seiner Diagonalen D die beiden Bohrungen 27, 28 und ferner eine Bohrung 29 auf, die ebenso symmetrisch zu der Diagonalen D vorgesehen ist wie die Gewindebohrung 30, die der Bohrung 12 des Ausführungsbeispiels nach Fig. 2 entspricht. Die Bohrung 29 bildet ein zentrisches Auge in einem Ansatz 31 des Einzelelementes 26, wobei die Außenwand 31a des runden Ansatzes in Durchmesser und Ausbildung der Wand 24 des Kreuzstücks 18 entspricht. Der Verbindungssteg 32 zwischen dem mittleren Bereich des Einzelelementes 26 und dem Ansatz 31, der ebenfalls symmetrisch zur Diagonalen D gelegen ist, hat eine Breite e, die dem Abstand b zwischen den Enden 24a und 24b der Wand 24 entspricht. Somit können die einzelnen Elemente 26 in Längsrichtung des kreuzartigen Mittelstückes 18 in dieses eingeschoben werden und durch Verstiften, Verschweißen od. dgl. miteinander verbunden werden. Es kann auch der endseitige Deckel oder die endseitige Kopfplatte des Bearbeitungselementes 7 für einen Zusammenhalt der Einzelelemente sorgen, sofern die Länge des Tragarmes dies erlaubt. Der Zusammenhalt der Einzelelemente hat auf die Dichtigkeit der Bohrungen keinen Einfluß, die über die Länge der Einzelelemente einen geschlossenen Querschnitt zeigen.

Bei der Ausführungsform nach Fig. 8 und 9 hat der Tragarm 5 eine kreisrunde Form und besteht aus einem Mittelstück 41, das ein Rohr sein kann, und vier gleichartigen Einzelelementen 42, deren Bohrungen 43, 44 wiederum in Richtung der Diagonalen D symmetrisch angeordnet sind und in Bezug auf den Arm 40 kreuzförmig zum Mittelpunkt U des Armes gelegen sind. Auch für diese Konfiguration des Tragarmes treffen die Widerstandsmomente der Ausführungsformen nach den Fig. 2 bis 7 zu.

Wenn vorstehend von "Bohrungen" gesprochen wird, so sind darunter sich über die gesamte Länge von bis zu 2000 mm und mehr der Strangpreßprofile erstreckende Längslöcher zu verstehen.

## Patentansprüche

1. Pneumatische oder hydraulische Medien oder Leitungen führender Tragarm (5) mit mindestens einer, sich von dem einen zum anderen Armende erstreckenden Bohrung, dadurch gekennzeichnet, daß der Arm (5) aus mindstens zwei gleichen stranggepreßten, die Armlänge aufweisenden, symmetrisch zu der horizontal und/oder vertikalen oder einer geneigten Längsquerschnittsebene (D) des Armes (5) symmetrisch zusammengefügten Einzelelementen (8, 26, 42) besteht, deren Längsbohrungen (9 - 11, 27 - 29, 43) symmetrisch zu der genannten Längsquerschnittsebene (D) angeordnet sind.

2. Tragarm nach Anspruch 1, dadurch gekennzeichnet, daß er aus vier gleichen Einzelelementen (8, 26, 42) besteht und die Bohrungen jedes Einzelelementes symmetrisch zu der Querschnittsdiagonalen (D) der Einzelelemente wie des Armes gelegen sind.

3. Tragarm nach Anspruch 1, dadurch gekennzeichnet, daß die Bohrungen des Armes (5) auf einem Kreis, einem Quadrat, einem Mehreck um die Armlängsmittelebene gelegen sind.

4. Tragarm nach Anspruch 1 und einem der Ansprüche 2 oder 3, dadurch gekennzeichnet, daß die Einzelteile an ihren benachbarten Wänden mit Verbindungsmitteln (15, 16) versehen sind.

5. Tragarm nach Anspruch 4, dadurch gekennzeichnet, daß die Verbindungsmittel Feder (15) und Nut (16) sind.

6. Tragarm nach Anspruch 1, dadurch gekennzeichnet, daß jedes Einzelelement eine symmetrisch zu einer der Längsquerschnittsebenen der Armes (5) oder des Einzelelementes (8, 26) gelegene Gewindebohrung (12, 13; 30) aufweist und der oder die Armdeckel mittels Schrauben mit den Einzelelementen verbunden sind.

7. Tragarm nach Anspruch 1 und einem oder mehreren der Ansprüche 2 bis 6, dadurch gekennzeichnet, daß die Einzelemente (26, 42) mittels eines in einer oder mehreren der Längsquerschnittsebene symmetrisch ausgebildeten Mittelstücke (18, 41) miteinander verbunden sind.

8. Tragarm nach Anspruch 7, dadurch gekennzeichnet, daß das Mittelstück ein Rohr oder Stab ist.

9. Tragarm nach Anspruch 8, dadurch gekennzeichnet, daß das Mittelstück symmetrische Kreuz- oder Mehreckform hat und symmetrisch angeordnete Bohrungen aufweist.

10. Tragarm nach Anspruch 9, dadurch gekennzeichnet, daß das Mittelstück mit Vorsprüngen oder Ausnehmungen versehen ist, die in entsprechende Ausnehmungen bzw. Vorsprünge der Einzelelemente eingreifen.

11. Tragarm nach Anspruch 10, dadurch gekennzeichnet, daß die Vorsprünge (31) des Mittelstücks (18) bzw. der Einzelelemente Längsbohrungen (29) bilden.

## Claims

1. Supporting arm (5) conducting pneumatic or hydraulic media or cables, having at least one bore hole extending from one end of the arm to the other, characterised in that the arm (5) comprises at least two identical, extruded individual elements (8, 26, 42) having the length of the arm and joined symmetrically so that they are symmetrical about the horizontal and/or veritcal plane (D) through the longitudinal cross-section of the arm (5) or about an inclined plane (D) through the longitudinal cross-section of the arm (5), the longitudinal bore holes (9–11, 27–29, 43) of which individual elements (8, 26, 42) are arranged symmetrically about the above-mentioned plane (D) through the longitudinal cross-section.

2. Supporting arm according to claim 1, characterised in that it comprises four identical individual elements (8, 26, 42), and the bore holes of each individual element lie so that they are symmetrical about the diagonal (D) of the cross-section of the individual elements and of the arm.

3. Supporting arm according to claim 1, characterised in that the bore holes of the arm (5) lie in a circle, a square, a polygon around the central longitudinal plane of the arm.

4. Supporting arm according to claim 1 and one of claims 2 or 3, characterised in that the individual elements are provided on their adjacent walls with connecting means (15, 16).

5.. Supporting arm according to claim 4, characterised in that the connecting means are a spring (15) and a slot (16).

6. Supporting arm according to claim 1, characterised in that each individual element has a screw bore hole (12, 13; 30) lying so that it is symmetrical about one of the planes of the longitudinal cross-section of the arm (5) or of the individual element (8, 26), and the arm cover or covers are connected by means of screws to the individual elements.

7. Supporting arm according to claim 1 and one or more of claims 2 to 6, characterised in that the individual elements (26, 42) are connected together by means of a middle piece (18, 41) symmetrically formed in one or more of the planes through the longitudinal cross-section.

8. Supporting arm according to claim 7, characterised in that the middle piece is a tube or a rod.

9. Supporting arm according to claim 8, characterised in that the middle piece has a symmetrical cross or polygon shape and symmetrically arranged bore holes.

10. Supporting arm according to claim 9, characterised in that the middle piece is provided with projections or recesses which engage respectively in corresponding recesses or projections.

11. Supporting arm according to claim 10, characterised in that the projections (31) of the middle pieces (18) and/or of the individual elements form longitudinal bore holes (29).

## Revendications

1. Bras-support (5) transportant des conduites ou des milieux pneumatiques ou hydrauliques comportant au moins un orifice s'étendant d'une extrémité à l'autre du bras, caractérisé en ce que le bras (5) est constitué d'au moins deux éléments séparés extrudés identiques (8, 26, 42), définissant la longueur du bras et assemblés de manière symétrique au plan transversal longitudinal (D) horizontal et/ou vertical ou oblique du bras (5), dont les orifices longitudinaux (9–11, 27–29, 43) sont disposés de manière symétrique audit plan transversal longitudinal (D).

2. Bras-support suivant la revendication 1, caractérisé en ce qu'il est constitué de quatre éléments séparés identiques (8, 26, 42) et en ce que les orifices de chacun des éléments séparés sont disposés de manière symétrique aux diagonales transversales (D) desdits éléments formant le bras.

3. Bras-support suivant la revendication 1, caractérisé en ce que les orifices du bras (5) sont disposés en cercle, en carré ou en polygone par rapport au plan médian longitudinal du bras.

4. Bras-support suivant la revendication 1 et une des revendications 2 ou 3, caractérisé en ce que les pièces séparées sont pourvues de moyens de raccordement (15, 16) sur leurs parois contiguës.

5. Bras-support suivant la revendication 4, caractérisé en ce que les moyens de raccordement sont des languettes (15) et des rainures (16).

6. Bras-support suivant la revendication 1, caractérisé en ce que chacun des éléments séparés présente un orifice taraudé (12, 13; 30) situé de manière symétrique à un des plans transversaux longitudinaux du bras (5) ou à l'élèment séparé (8, 26) et en ce que le ou les couvercles du bras est ou sont relié(s) aux éléments séparés au moyen de vis.

7. Bras-support suivant la revendication 1 et une ou plusieurs des revendications 2 à 6, caractérisé en ce que les éléments séparés (26, 42) sont reliés entre eux au moyen d'une pièce centrale (18, 41) de structure symétrique dans un ou plusieurs des plans transversaux longitudinaux.

8. Bras-support suivant la revendication 7, caractérisé en ce que la pièce centrale est un tube ou une barre.

9. Bras-support suivant la revendication 8, caractérisé en ce que la pièce centrale possède une forme cruciforme ou polygonale symétrique et présente des orifices disposés symétriquement.

10. Bras-support suivant la revendication 9, caractérisé en ce que la pièce centrale est pourvue de saillies ou d'évidements, lesquels viennen s'emboîter dans des évidements ou des saillies de forme correspondante prévues dans les éléments séparés.

11. Bras-support suivant la revendication 11, caractérisé en ce que les saillies (31) de la pièce centrale (18) ou des éléments séparés forment des orifices longitudinaux (29).

*Fig.1*

*Fig.2*

*Fig.3*

Fig.4

Fig.5

Fig.6

# Fig.7

# Fig.8

# Fig.9